# EUROPÄISCHE PATENTSCHRIFT

(11) **EP 2 985 209 B1**
(45) Veröffentlichungstag und Bekanntmachung des Hinweises auf die Patenterteilung: **19.09.2018**
(21) Anmeldenummer: 15180840.9
(22) Anmeldetag: 12.08.2015
(51) Int. Cl.: B62D 25/04

(54) **STRUKTURBAUTEIL UND VERFAHREN ZUR HERSTELLUNG EINES STRUKTURBAUTEILS**
STRUCTURAL ELEMENT AND METHOD FOR MAKING A STRUCTURAL ELEMENT
COMPOSANT DE STRUCTURE ET PROCEDE DE FABRICATION D'UN COMPOSANT DE STRUCTURE

(30) Priorität: 14.08.2014 DE 102014216225
(43) Veröffentlichungstag der Anmeldung: 17.02.2016
(73) Patentinhaber: Muhr und Bender KG, 57439 Attendorn (DE)
(72) Erfinder: Steffens, Hubertus, 57489 Drolshagen (DE); Hahn, Christoph, 57439 Attendorn (DE)
(74) Vertreter: Neumann Müller Oberwalleney & Partner Patentanwälte

(56) Entgegenhaltungen:
- EP-A1- 1 205 377
- EP-A1- 2 754 603
- EP-A2- 1 040 984
- WO-A1-2009/112407

## Beschreibung

Die vorliegende Erfindung betrifft eine Fahrzeugsäule für eine Kraftfahrzeugkarosserie, mit einem ersten Formteil als Innenblech der Fahrzeugsäule und einem zweiten Formteil als Außenblech der Fahrzeugsäule. Weiterhin betrifft die vorliegende Erfindung ein Verfahren zur Herstellung einer solchen Fahrzeugsäule.

Aus der DE 10 2011 120 519 A1 ist ein solches Strukturbauteil gemäß dem Oberbegriff des Anspruchs 1 bekannt, und zwar eine Fahrzeugsäule für ein Kraftfahrzeug, die eine Innenhaut aus einem kaltumgeformten Blechteil und eine Außenhaut aus einem weiteren umgeformten Blechteil aufweist. Die Innenhaut weist in Längsrichtung der Fahrzeugsäule verlaufende Schweißflansche auf, die sich mit Schweißflanschen der Außenhaut überdecken. Zwischen den beiden Blechteilen sind weitere Verstärkungs- und Versteifungsbauteile vorgesehen. Die aufeinanderliegenden Schweißflansche und auskragende Materialabschnitte der Verstärkungsstruktur werden über Punktschweißverbindungen oder Laserschweißverbindung miteinander verbunden.

Aus der WO 2009/112407 A1 ist ein Hohlprofil mit zwei Halbschalenblechen bekannt, wobei das erste Halbschalenblech dem Inneren und das zweite Halbschalenblech dem Äußeren der Fahrzeugkarosserie zugewandt ist. Zwischen den beiden Halbschalenblechen ist ein Stegblech angeordnet, dass der zusätzlichen Versteifung des Hohlprofils dient.

Die EP 2 754 603 A1 offenbart eine warmumgeformte und gehärtete B-Säulenverstärkung. Diese ist aus einer Platine aus einem Tailor Welded Blank, das zwei miteinander verschweißte Tailor Rolled Blanks aufweist, hergestellt.

Der vorliegenden Erfindung liegt die Aufgabe zugrunde, eine Fahrzeugsäule bereitzustellen, die sich einfach mit weiteren Fahrzeugkomponenten verbinden lässt und ein geringes Gewicht aufweist. Die Aufgabe besteht ferner darin, ein Verfahren vorzuschlagen, mit dem eine entsprechende Fahrzeugsäule erzeugt werden kann.

Die Lösung besteht in einer Fahrzeugsäule, bei der dass das Außenblech ein warmumgeformtes und gehärtetes Formteil und das Innenteil ein kaltumgeformtes Formteil ist. Weiterhin weist das Außenblecht einen Verbindungsabschnitt zum Verbinden mit dem Innenblech auf, wobei das Innenblech und das Außenblech mittels einer Hochenergiestrahlschweißnaht entlang einer Verbindungskante des Verbindungsabschnitts miteinander verbunden sind. Dabei ist die Verbindungskante des Verbindungsabschnitts von einer Außenkante des Innenbleches derart beabstandet, dass das Innenblech zwischen der Verbindungskante des Außenbleches und der Außenkante des Innenbleches einen einlagigen Flanschabschnitt der Fahrzeugsäule bildet. Des Weiteren weist das Außenblech eine variable Dicke über einer Längserstreckung des Außenbleches auf.

Die Fahrzeugsäule, die ein Strukturbauteil ist, kann eine A-, B- oder C-Säule des Kraftfahrzeuges sein. Das erste Formteil ist ein Innenteil der Fahrzeugsäule, auch Schließblech, Innenblech oder A-, B- oder C- Säule Innen genannt, und das zweite Formteil ist ein Außenteil der Fahrzeugsäule, auch als Außenblech oder A-, B- oder C-Säule Außen bezeichnet. Die Fahrzeugsäulen werden üblicherweise mit einer Außenhaut, welche das außen sichtbare Karosserieblech darstellt, verbunden. Diese Außenhaut wird lediglich mit dem Flanschabschnitt des Schließblechs beziehungsweise des ersten Formteils verbunden. Die äußere Fahrzeugsäule beziehungsweise das zweite Formteil werden nicht mit der Außenhaut gefügt.

Erfindungsgemäß ist eine Verbindungskante des zweiten Formteils gegenüber einer Außenkante des ersten Formteils versetzt, so dass das erste Formteil einen einlagigen Flanschabschnitt des Strukturbauteils bildet. Mit anderen Worten weist die Fahrzeugsäule in Form des Flanschabschnitts einen Bereich auf, in dem sich das erste Formteil und das zweite Formteil nicht überlagern, respektive einander überdecken.

Damit eignet sich die Fahrzeugsäule, respektive das Strukturbauteil besonders gut zum Verschweißen mit weiteren Komponenten, beispielsweise einer Außenhaut eines Kraftfahrzeuges, da durch den einlagigen Flanschabschnitt, der auch als Schweißflansch bezeichnet werden kann, nicht mehr beide Formteile, sondern nur noch das kaltumgeformte erste Formteil ohne Mitwirken des zweiten Formteils mit der weiteren Komponente verschweißt oder auf andere Weise gefügt werden muss. Zudem ist das erste Formteil kaltumgeformt und kann im Vergleich zum gehärteten zweiten Formteil besonders gut geschweißt werden. Des Weiteren kann durch die Rückstellung der Verbindungskante des zweiten Formteils gegenüber der Außenkante des ersten Formteils die Hochenergiestrahlschweißnaht, kurz die Schweißnaht, seitlich gesetzt sein, wodurch eine stabile Verbindung zwischen dem ersten und dem zweiten Formteil erreichbar ist. Darüber hinaus wird durch die Rückstellung des zweiten Formteils gegenüber dem ersten Formteil eine Doppelung der Materialien durch eine Überlagerung des zweiten Formteils über den Flanschabschnitt des ersten Formteils vermieden, wodurch Gewicht unmittelbar am zweiten Formteil eingespart und insgesamt ein leichteres Strukturbauteil bereitgestellt wird. Weiterhin kann durch die sich über die Längserstreckung des zweiten Formteils verändernde Blechdicke das zweite Formteil gezielt lokal an den jeweiligen Belastungsfall angepasst werden. Somit können weniger stark beanspruchte Teilbereiche des zweiten Formteils beziehungsweise des Strukturbauteils eine geringere Dicke aufweisen, wodurch der Materialeinsatz des zweiten Formteils reduziert wird und insgesamt das Gewicht des Strukturbauteils verringert wird. Im Umkehrschluss können besonders stark beanspruchte Teilbereiche des zweiten Formteils beziehungsweise des Strukturbauteils dicker und somit stabiler ausgebildet sein.

In der Beschreibung und in den Ansprüchen ist der besseren Lesbarkeit halber die Einzahl oder der unbestimmte Artikel verwendet, wobei sich dies stets auch auf die Mehrzahl dieser Elemente bezieht, solange nicht der Gesamtzusammenhang eindeutig etwas Anderes deutlich macht. Damit ist vor allem gemeint, dass das Strukturbauteil wenigstens einen Flanschabschnitt, wenigstens eine Außenkante, wenigstens einen Verbindungsabschnitt, wenigstens eine Verbindungskante, wenigstens eine Schweißnaht und weitere Formteile aufweisen kann.

Das erste Formteil, respektive das Innenblech ist ein kaltumgeformtes Bauteil aus einem metallischen Material, das vorzugsweise aus einem Stahlblech hergestellt ist. Das Stahlblech hat eine Dicke, die um ein Vielfaches kleiner, das heißt ein Bruchteil der Erstreckung in Längs- oder Querrichtung des Bauteils ist. Unter Kaltumformung wird das Umformen von Metallen bei einer Temperatur deutlich unterhalb deren Rekristallisationstemperatur verstanden. Als Stahlwerkstoff kann beispielsweise ein kaltgewalztes, mikrolegiertes Stahlblech, beispielsweise HC 420 LA+ verwendet werden. Das Stahlblech kann mit einer Zinkbeschichtung, beispielsweise ZE 75/75, versehen werden.

Bei dem zweiten Formteil, respektive dem Außenblech handelt es sich um ein warmumgeformtes und gehärtetes Bauteil aus einem metallischen Material. Unter Warmumformung wird im Rahmen der vorliegenden Offenbarung insbesondere das Umformen von Metallen oberhalb deren Rekristallisationstemperatur verstanden. Das gehärtete zweite Formteil ist vorzugsweise ein Formteil aus einem Stahlblech, welches eine Dicke hat, die um ein Vielfaches kleiner ist als eine Erstreckung in Längs- oder Querrichtung des Bauteils. Als Stahlwerkstoff kann Borstahl, beispielsweise 22MnB5, verwendet werden, wobei jeder andere härtbare Stahlwerkstoff ebenso denkbar ist. Das zweite Bauteil kann beschichtet sein, insbesondere mit einer Aluminium-Silizium-Legierung oder Zink, um eine Verzunderung des Bauteils während der Warmumformung zu vermeiden beziehungsweise als Korrosionsschutz für das zweite Formteil zu dienen. Dabei kann das zweite Bauteil vor und/oder nach der Warmumformung beschichtet werden. Bei Beschichtung vor der Warmumformung kann zum einen das Bandmaterial, aus dem die zweite Platine erzeugt wurde, oder zum anderen die Platine selbst beschichtet werden. Bei Beschichtung nach der Warmumformung kann das umgeformte und mitunter bereits gehärtete zweite Formteil beschichtet werden. Das zweite Formteil wird entweder nach der Warmumformung oder zusammen mit der Warmumformung zumindest in Teilbereichen, vorzugsweise vollständig, gehärtet. Das Warmumformen und Härten kann in einem Prozess in einem Presshärte-Werkzeug durchgeführt werden. Dieser kombinierte Umform- und Härteprozess wird auch als Presshärten bezeichnet. Beispielsweise kann das zweite Formteil aus einer Platine hergestellt sein, die vor dem Warmumformen auf mindestens 800 bis 850° Celsius erwärmt, dann rasch in ein Umformwerkzeug eingelegt und im Warmzustand umgeformt und dabei durch Kontaktierung mit dem Umformwerkzeug schnell abgekühlt wird. Das Umformwerkzeug kann von innen her zwangsgekühlt wird. Das Abkühlen des zweiten Formteils im Umformwerkzeug kann beispielsweise innerhalb von etwa 15 Sekunden oder weniger auf beispielsweise etwa 200° Celsius erfolgen. Neben der vorbeschriebenen Presshärtung kann das zweite Formteil auch auf andere Weise gehärtet werden.

Das zweite Formteil hat eine variable Dicke über der Längserstreckung. Mit anderen Worten hat das erste Formteil Teilbereiche mit unterschiedlichen Blechdicken, die beispielsweise durch flexibles Walzen von Bandmaterial oder durch Verbinden mehrerer Bauteile unterschiedlicher Blechdicke erzeugt werden können. Im Wege des flexiblen Walzens hergestellte Platinen mit unterschiedlichen Blechdicken werden auch als Tailor Rolled Blanks bezeichnet. Platinen, die aus mehreren Teilplatinen mit unterschiedlicher Blechdicke insbesondere in stumpfem Stoß zusammengesetzt und verschweißt sind, werden auch Tailor Welded Blanks genannt. Neben dem zweiten Formteil kann auch das erste Formteil Teilbereiche mit unterschiedlichen Blechdicken aufweisen, das wie auch das zweite Formteil beispielsweise durch flexibles Walzen von Bandmaterial oder durch Verbinden mehrerer Bauteile unterschiedlicher Blechdicke hergestellt sein kann. Prinzipiell können sowohl das erste als auch das zweite Formteil auch aus unterschiedlichen Materialien zusammengesetzt sein; entscheidend ist, dass diese mindestens einen metallischen Teilbereich aufweisen, der zu einer dreidimensionalen Struktur umgeformt ist. Die Bauteile werden insofern auch als Formteile bezeichnet.

Gemäß einem Aspekt der vorliegenden Erfindung weist das Strukturbauteil genau die zwei Formteile auf, nämlich das eine kaltumgeformte erste Formteil und das warmumgeformte und gehärtete zweite Formteil. Vorteilhafterweise bildet das erste Formteil ein Innenteil des Strukturbauteils und das zweite Formteil ein Außenteil des Strukturbauteils, deren jeweilige außenliegende Außenfläche frei zugänglich sein kann.

In bevorzugter Weise weist der Flanschabschnitt über zumindest 50% einer Längserstreckung des ersten Formteils eine Quererstreckung von mehr als 20 Millimetern auf.

Mit anderen Worten beträgt ein Abstand zwischen der Verbindungskante und der Außenkante, zumindest über 50% der Längserstreckung des ersten Formteils, mehr als 20 Millimeter. Vorzugsweise ist der Flanschabschnitt über nahezu die gesamte Länge des ersten Formteils, das heißt über zumindest 90% der Längserstreckung des ersten Formteils, breiter als 20 Millimeter. Durch einen derart breiten Flanschabschnitt bietet das erste Formteil einen ausreichend breiten Schweißflansch, um das Strukturbauteil entlang des Flanschabschnitts mit einer weiteren Komponente zu fügen. Besagte weitere Komponente, die nicht zum Strukturbauteil gehört, kann beispielsweise eine Außenhaut eines Kraftfahrzeuges sein.

Des Weiteren kann der Verbindungabschnitt über zumindest den größten Teil seiner Länge, im Querschnitt durch das Strukturbauteil betrachtet, eine Breite von weniger als 10 Millimeter aufweisen, insbesondere von weniger als 5 Millimeter. Der Verbindungsabschnitt kann eine solche geringe Breite zumindest über den größten Teil der Länge des zweiten Formteils haben. Weiterhin kann sich der Flanschabschnitt über zumindest 50% einer Längserstreckung des ersten Formteils und/oder kann sich der Verbindungsabschnitt über zumindest 50% einer Längserstreckung des zweiten Formteils erstrecken. Nach einer möglichen Ausgestaltung können der einlagige Flanschabschnitt und der Verbindungsabschnitt zumindest etwa gleich lang sein und sich der Länge nach insbesondere über den gesamten in Anlage stehenden Längsabschnitt zwischen dem ersten und dem zweiten Formteil erstrecken. Auf diese Weise können das erste und das zweite Formteil über einen langen Längsabschnitt mittels einer Hochenergieschweißnaht miteinander gefügt werden. Vorteilhaft ist, dass die Schweißnaht, anders als bei einem Widerstandspunkt-Schweißverfahren, nicht durch die Bleche des ersten und des zweiten Formteils geschweißt werden muss, sondern dass die Hochenergieschweißnaht auf dem ersten Formteil entlang der Verbindungskante des zweiten Formteils gesetzt wird. Somit kann der Verbindungsabschnitt besonders schmal ausgebildet werden, wodurch Gewicht eingespart wird.

In bevorzugter Weise ist die Hochenergiestrahlschweißnaht über zumindest 50% einer Kantenlänge der Verbindungskante durchgehend ausgebildet. Dadurch wird, im Unterschied zu einer lediglich partiellen Punktverschweißung, eine besonders stabile Verbindung zwischen dem ersten und dem zweiten Formteil bereitgestellt. Gemäß der vorliegenden Offenbarung ist eine durchgehende Schweißnaht hierauf nicht im wörtlichen Sinne beschränkt, sondern umfasst insbesondere auch eine Steppnaht, bei der sich benachbarte Schweißpunkte überlagern.

Gemäß einem weiteren Aspekt der vorliegenden Erfindung kann vorgesehen sein, dass der Verbindungsabschnitt des zweiten Formteils mit dem ersten Formteil einen Winkel von 1° bis 90° einschließt. Mit andere Worten kann der Verbindungsabschnitt des zweiten Formteils schräg oder senkrecht auf dem ersten Formteil angeordnet sein. Auf diese Weise kommen die beiden Formteile zumindest im Bereich des Verbindungsabschnitts nur entlang der Verbindungskante miteinander in Anlage. Somit kann ein besonders schmaler Verbindungsabschnitt bereitgestellt werden, wodurch ein leichteres zweites Formteil und im Ergebnis ein leichteres Strukturbauteil bereitgestellt wird. Durch den schmalen Verbindungsabschnitt wird eine Überlagerung unterschiedlicher Blechdicken des ersten und des zweiten Formteils vermieden, wodurch die beiden Formteile einfacher gefügt werden können. Im Fall von Blechdickenvariationen des zweiten Formteils, welche für eine anwendungs- oder marktspezifische Festigkeitsauslegung des Strukturbauteils erforderlich sein können, muss das erste Formteil aufgrund des schmalen Verbindungsabschnitts lokal nicht entsprechend angepasst werden. Somit kann das erste Formteil, beispielsweise ein Innenblech einer B-Säule eines Fahrzeuges, auch Schließblech genannt, stets dieselbe Dimensionierung aufweisen und lediglich das zweite Formteil, beispielsweise ein Außenblech einer B-Säule, an anwendungs- oder marktspezifische Vorgaben angepasst werden. Zudem ist vorteilhaft, dass durch die schräge Anordnung des Verbindungsabschnitts auf dem ersten Formteil hinter der Schweißnaht ein sich öffnender Raum gebildet ist, der zur Entgasung eines während des Hochenergiestrahl-Schweißvorgangs abströmenden Metalldampfs dienen kann.

Gemäß einem noch weiteren Aspekt der vorliegenden Erfindung kann der Verbindungsabschnitt in Form einer Lasche ausgebildet sein beziehungsweise zumindest eine Lasche umfassen, die in einen in dem ersten Formteil ausgebildeten korrespondierenden Schlitz eingreift. Auf diese Weise wird eine Steckverbindung bereitgestellt, die die Verbindung zwischen dem ersten und dem zweiten Formteil zusätzlich verstärkt. Insbesondere können mehrere der Verbindungsabschnitte in Form von Laschen vorgesehen sein, die mit dem ersten Formteil verschweißt sind, wobei zwischen zwei benachbarten Laschen ein unverschweißter Zwischenabschnitt gebildet sein kann. Beispielsweise können mehrere dieser Schlitze hintereinander in einer oder mehreren Reihen in Längserstreckung des ersten Formteils vorgesehen sein, in welche die Laschen des zweiten Formteils eingesteckt sind.

Weiterhin kann das zweite Formteil im Querschnitt betrachtet über mindestens 80% einer Längserstreckung des ersten Formteils schmaler als das erste Formteil ausgebildet sein. Mit anderen Worten ist die Breite des zweiten Formteils schmaler als die Breite des ersten Formteils, und zwar vorzugsweise zumindest über den größten Teil der Länge beziehungsweise der gesamten Länge des kürzeren der beiden Formteile. Das zweite Formteil kann in Form eines Hutprofils oder U-förmig ausgebildet und auf einem zumindest im Wesentlichen flach ausgebildeten ersten Formteil aufgesetzt sein. Somit weist das zweite Formteil zwei sich in Längsrichtung des zweiten Formteils erstreckende Verbindungskanten auf, die gegenüber den beiden Außenkanten des ersten Formteils zurückgestellt sind.

Nach einer Ausgestaltung weist nur das Außenteil der Fahrzeugsäule eine variable Dicke über deren Längserstreckung auf, um zur Beeinflussung des Crashverhaltens der Fahrzeugsäule gezielt verstärkte Bereiche, schwächere Bereiche beziehungsweise weichere Bereiche auszubilden. Auf diese Weise kann ein standardisiertes Schließblech bereitgestellt werden, das marktübergreifend gleichbleibend eine kontinuierliche Dicke aufweist. Es versteht sich jedoch, dass nach einer alternativen oder ergänzenden Ausführungsform auch das Schließblech mit variabler Dicke über dessen Längserstreckung ausgebildet sein kann. Auf diese Weise können gegebenenfalls zusätzlich zur äußeren Fahrzeugsäule gezielt Teilbereiche der Fahrzeugsäule verstärkt werden.

Die Lösung der oben genannten Aufgabe besteht weiter in einem Verfahren zur Herstellung eines Strukturbauteils, insbesondere für eine Kraftfahrzeugkarosserie, umfassend folgende Schritte: Kaltumformen einer ersten Platine zu einem ersten Formteil; Erzeugen einer zweiten Platine mit einer variablen Dicke über einer Längserstreckung der zweiten Platine; Warmumformen der zweiten Platine zu einem zweiten Formteil mit einem Verbindungsabschnitt zum Verbinden mit dem ersten Formteil; Härten des zweiten Formteils; Aufsetzen des zweiten Formteils auf das erste Formteil derart, dass eine mit dem ersten Formteil in Anlage kommende Verbindungskante von einer Außenkante des ersten Formteils beabstandet ist; Fügen des zweiten Formteils mit dem ersten Formteil mittels einer mit einem Hochenergiestrahlverfahren erzeugten Hochenergiestrahlschweißnaht, die entlang der Verbindungskante verläuft.

Von Vorteil ist, dass durch das Hochenergiestrahl-Schweißverfahren im Vergleich zu anderen Schweißverfahren thermische Energie geringer und konzentrierter in die zu fügenden Formteile eingetragen wird. Somit ist ein thermisch bedingter Verzug verglichen mit Widerstandspunktschweißen deutlich geringer. Zudem wird beim Hochenergiestrahlschweißverfahren lediglich ein einseitiger Zugang zu den miteinander zu verschweißenden Formteilen benötigt. Dagegen muss bei einem Widerstandspunkt-Schweißverfahren der Zugang von zwei Seiten gegeben sein, um die Schweißelektroden beidseitig an die Formteile heranführen zu können. Durch den Versatz der Verbindungskante des zweiten Formteils gegenüber der Außenkante des ersten Formteils ist die Verbindungskante zudem seitlich gut erreichbar beziehungsweise einsehbar, wodurch der Einsatz von Hochenergiestrahl-Schweißverfahren vereinfacht wird. Als Hochenergiestrahl-Schweißverfahren eignet sich neben dem Lichtbogen- und Elektronenstrahl-Schweißverfahren vor allem das Laserstrahl-Schweißverfahren, wobei das gewählte Schweißverfahren mit oder ohne Zusatzmaterial durchgeführt werden kann.

Die zweite Platine kann nach einer ersten Möglichkeit aus flexibel gewalztem Bandmaterial hergestellt werden. Durch das flexible Walzen der zweiten Platine erhält das zweite Formteil eine variable Blechdicke über dessen Längserstreckung hinweg. Auf diese Weise können stark beanspruchte Teilbereiche, die beispielsweise bei einem Seitenaufprall nicht einknicken sollen, dicker ausgebildet werden. Das flexible Walzen erlaubt es im Gegenzug, weniger beanspruchte Teilbereiche, oder solche, die gezielt bei einer äußeren Belastung einknicken sollen, schwächer, das heißt dünner, auszubilden. Auf diese Weise kann die Dicke des zweiten Formteils über dessen Längserstreckung gezielt verändert und damit Gewicht eingespart werden.

Nach einer zweiten Möglichkeit kann die zweite Platine auch durch Verschweißen mehrerer Teilplatinen mit unterschiedlichen Blechdicken hergestellt werden. Derartige Platinen werden aus als Tailor Welded Blanks bezeichnet.

Durch das erfindungsgemäße Herstellungsverfahren ergeben sich dieselben Vorteile, wie sie im Zusammenhang mit dem erfindungsgemäßen Strukturbauteil beschrieben worden sind, so dass hier abkürzend auf obige Beschreibung Bezug genommen wird. Dabei versteht es sich, dass alle genannten Ausgestaltungen der Vorrichtung auf das Verfahren übertragbar sind, und umgekehrt. Das erfindungsgemäße Strukturbauteil hat einen nur einlagigen Flanschabschnitt, der durch das gegenüber dem zweiten Formteil überstehende erste Formteil gebildet wird. Dieser einlagige Flanschabschnitt dient zum Verbinden mit einem weiteren Anschlussbauteil, das nicht Teil des Strukturbauteils ist, beispielsweise der Außenhaut einer Fahrzeugkarosserie.

Um eine besonderes stabile Verbindung zwischen dem ersten und dem zweiten Formteil herzustellen, kann die Hochenergiestrahlschweißnaht über zumindest 50 % einer Kantenlänge der Verbindungskante erzeugt werden. Dabei kann eine durchgängige oder unterbrochene Bahn geschweißt werden. Die Schweißnaht, welche der Belastung der Formteile angepasst werden kann, ist stabiler als herkömmliche widerstandgeschweißte Punkte. Vorteilhafterweise wird die Hochenergiestrahlschweißnaht durchgehend über zumindest 50 % der Länge der Verbindungskante ausgebildet.

Gemäß einem Aspekt der vorliegenden Erfindung ist vor dem Schritt des Kaltumformens der ersten Platine und/oder des Warmumformens der zweiten Platine zumindest einer der folgenden Schritte vorgesehen: Oberflächenbeschichten der ersten Platine; Oberflächenbeschichten der zweiten Platine. Die erste Platine kann beispielsweise mit Zink und die zweite Platine mit Aluminium-Silizium beschichtet sein. Neben dem Korrosionsschutz, den die beiden Beschichtungen bieten, eignet sich vor allem die Aluminium-Silizium-Beschichtung zur Vermeidung einer Verzunderung des zweiten Formteils während der Warmumformung. Von Vorteil ist, dass die Formteile nach der Umformung und insbesondere nach dem Fügeschritt nicht mehr beschichtet werden müssen. Dadurch wird der Herstellungsprozess optimiert.

In bevorzugter Weise werden vor dem Schritt des Fügens sämtliche Durchgangsöffnungen in das Strukturbauteil eingearbeitet. Das heißt, dass das erste Formteil vorzugsweise nach dem Umformprozess gelocht wird, da sich die erste Platine während der Kaltumformung stark verziehen kann. Alternativ oder zusätzlich können die Durchgangsöffnungen auch vor dem Kaltumformprozess eingearbeitet werden, wenn es die konstruktiv vorgegebenen Toleranzbereiche der Durchgangsöffnungen entsprechend ermöglichen. Die Durchgangsöffnungen des zweiten Formteils werden vorteilhafterweise vor dem Härten, insbesondere vor dem Presshärten in die zweite Platine eingebracht, da das Einbringen der Durchgangsöffnungen in das gehärtete Material mit einem erhöhten Aufwand einhergeht. Dann können die Durchgangslöcher beispielsweise mittels eines Laserstrahl-Schneidverfahrens in das gehärtete zweite Formteil geschnitten werden. In bevorzugter Weise werden die Durchgangslöcher bereits vor der Warmumformung in die zweite Platine eingebracht, da sich diese während der Warmumformung nicht wesentlich verzieht.

Während der Warmumformung können Einziehflansche entstehen. Die Einziehflansche können als randseitige Abschnitte des zweiten Formteils gebildet sein, das im Querschnitt beispielsweise hutprofilförmig gestaltet sein kann. Die Einziehflansche können anschließend zumindest teilweise beschnitten werden, insbesondere derart, dass der Einziehflansch eine Quererstreckung von weniger als 10 Millimeter aufweist. Somit kann der wenigstens eine beschnittene Einziehflansch als der Verbindungsabschnitt zum Verbinden des ersten Formteils mit dem zweiten Formteil verwendet werden.

Weiterhin kann vor dem Fügen der Einziehflansch vollständig abgeschnitten werden. Dadurch kann das zweite Formteil in einem winkligen Stoß zum ersten Formteil angeordnet werden. Auf diese Weise kommt das zweite Formteil nur entlang der Verbindungskante in Anlage mit dem ersten Formteil, wodurch der Verbindungsabschnitt nicht breiter als die Schweißnaht wird. Somit wird ein sich überlappender Bereich zwischen dem Verbindungsabschnitt und dem zweiten Formteil auf ein Minimum reduziert.

Um die Verbindung zwischen dem Verbindungsabschnitt und dem ersten Formteil zu verstärken, kann der Einziehflansch vollständig abgeschnitten werden und/oder das zweite Formteils derart beschnitten werden, dass zumindest eine Lasche erzeugt wird. In dem ersten Formteil kann ein zur Lasche korrespondierender Schlitz eingearbeitet werden, in welchen die Lasche beim Aufsetzen des zweiten Formteils auf das erste Formteil eingesetzt, respektive gesteckt werden kann. Vorzugsweise werden am ersten Formteil mehrere der Schlitze und am zweiten Formteil mehrere entsprechende Laschen erzeugt und ineinandergesteckt.

Zur Umformung werden üblicherweise rechteckige Platinen oder aus einem Bandmaterial getrennte Formschnitte verwendet. Zur Herstellung des ersten Formteils kann analog zum zweiten Formteil zunächst das Bandmaterial flexibel gewalzt werden. Aus diesem Bandmaterial kann die erste Platine herausgearbeitet werden, so dass die erste Platine, wie die zweite Platine, eine variable Dicke über deren Längserstreckung aufweist. Die erste Platine wird dann in einem Kaltumformschritt zum ersten Formteil umgeformt. Die zweite Platine kann zunächst auf Austenitisierungstemperatur, beispielsweise 800 bis 850° Celsius, erhitzt und dann zum zweiten Formteil warmumgeformt werden. Dabei kann die zweite Platine während des Warmumformschrittes pressgehärtet werden, indem die zweite Platine in einem eine Matrize und einen Stempel aufweisenden Umformwerkzeug nicht nur warmumgeformt, sondern auch durch eine im Umformwerkzeug integrierte Kühleinrichtung unterhalb einer kritischen Abkühlgeschwindigkeit, beispielsweise innerhalb von beispielsweise 15 Sekunden auf eine Temperatur von unter 200° Celsius, abgeschreckt wird. Neben der Presshärtung kann das zweite Formteil auch auf andere Weise zumindest in Teilbereichen, vorzugsweise vollständig, gehärtet werden.

Bevorzugte Ausführungsbeispiele werden nachstehend anhand der Zeichnungsfiguren erläutert. Hierin zeigt:
- Figur 1: eine B-Säule gemäß einer ersten Ausführungsform in Seitenansicht;
- Figur 2: die B-Säule in perspektivischer Explosionsdarstellung;
- Figur 3: die B-Säule in schematischer Querschnittsansicht entlang der in Figur 1 gezeigten Schnittlinie III-III;
- Figur 4: eine vergrößerte Detailansicht der in Figur 3 gezeigten B-Säule;
- Figur 5: eine B-Säule gemäß einer zweiten Ausführungsform in schematischer Querschnittsansicht;
- Figur 6: eine vergrößerte Detailansicht der in Figur 5 gezeigten B-Säule;
- Figur 7: einen Teil einer B-Säule gemäß einer dritten Ausführungsform im Querschnitt in dreidimensionaler Ansicht;
- Figur 8: ein erstes Formteil der in Figur 7 gezeigten B-Säule in Draufsicht; und
- Figur 9: eine B-Säule gemäß einer vierten Ausführungsform in perspektivischer Explosionsdarstellung.

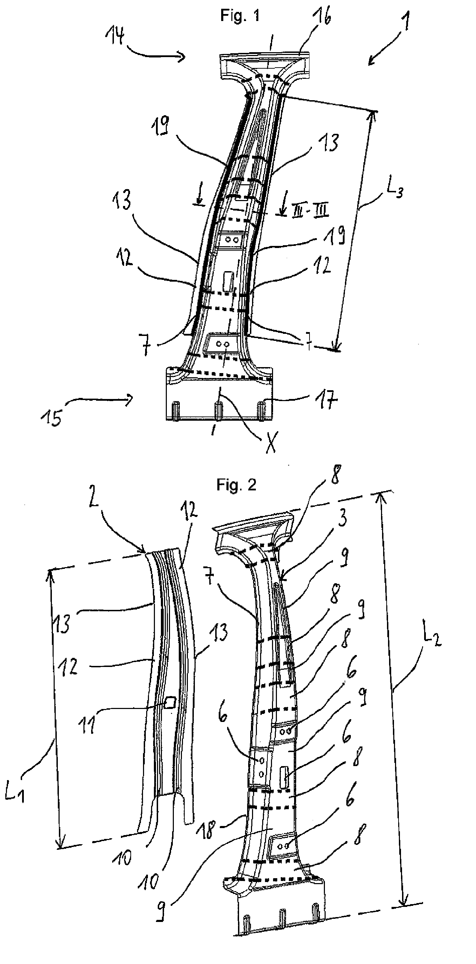

In Figur 1 ist ein als Fahrzeugsäule, hier B-Säule, eines Kraftfahrzeuges ausgebildetes Strukturbauteil 1 dargestellt. Die B-Säule 1 dient in an sich bekanntermaßen zum Verbinden eines Dachrahmens mit einem Schweller der Karosserie. Bei einem Crash erfüllt die B-Säule, wie auch die weiteren Fahrzeugsäulen, eine sicherheitsrelevante Funktion, da sie eine nicht gezeigte Fahrgastzelle gegen Verformung stabilisiert und Kräfte beim Seitenaufprall absorbiert.

In Figur 2 ist die Fahrzeugsäule 1 in Explosionsdarstellung gezeigt. Die Fahrzeugsäule ist zweiteilig ausgebildet und weist ein erstes Formteil 2, das als Schließblech oder Innenblech einer B-Säule 1 bezeichnet wird, und ein zweites Formteil 3, das ein Außenblech der B-Säule 1 ist, auf.

Das erste Formteil 2 ist ein kaltumgeformtes Formteil, das eine gleichbleibende Dicke in Längs- und Querrichtung aufweist. Zur Herstellung des ersten Formteils 2 wird ein Stahlblech gewalzt. Als Stahlwerkstoff kann ein kaltgewalztes, mikrolegiertes Stahlblech, beispielsweise HC 420 LA+, vorgesehen werden, das vor der Kaltumformung mit einer beidseitigen Zinkbeschichtung versehen werden kann. Aus diesem beschichteten Bandmaterial wird eine erste Platine herausgearbeitet, die anschließend zum ersten Formteil 2 kaltumgeformt wird. Unter Kaltumformung wird das Umformen von Metallen bei einer Temperatur deutlich unterhalb der Rekristallisationstemperatur des hier verwendeten Stahlblechs, hier bei Raumtemperatur, verstanden.

Das zweite Formteil 3 ist ein warmumgeformtes und gehärtetes Formteil. Zur Herstellung des zweiten Formteils 3 kann zunächst ein Bandmaterial, hier beispielsweise ein 22MnB5 Stahlblech, mit einer Aluminium-Silizium-Beschichtung versehen und flexibel gewalzt werden. Das flexibel gewalzte Stahlblech wird auch als Tailor Rolled Blank bezeichnet. Aus diesem beschichteten Bandmaterial wird eine zweite Platine herausgearbeitet, so dass die zweite Platine eine variable Dicke über deren Längserstreckung aufweist. Vor einer Warmumformung der zweiten Platine werden Durchgangsöffnungen 6 für einen Schließkeil einer Vordertüre oder für eine Anbindung einer Hintertüre in die zweite Platine eingebracht. Grundsätzlich können die Durchgangsöffnungen 6 auch in das warmumgeformte und gehärtete Formteil 3 mittels eines Laserstrahl-Schneidverfahrens eingebracht werden. Anschließend wird die zweite Platine warmumgeformt, wobei unter Warmumformung das Umformen von Metallen oberhalb der Rekristallisationstemperatur des hier verwendeten 22MnB5 Stahls verstanden wird.

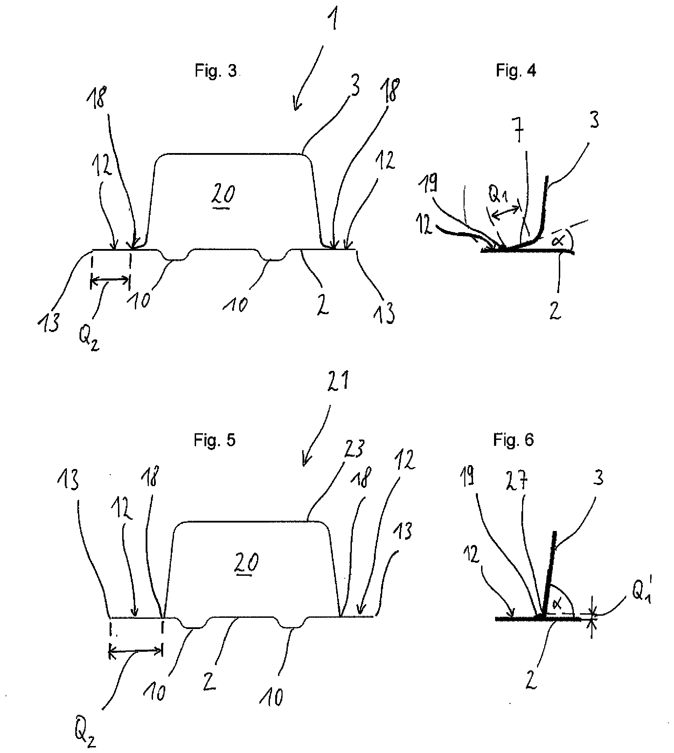

Konkret wird zur Warmumformung die zweite Platine zunächst auf 800 bis 850° Celsius erhitzt und dann zum zweiten Formteil 3 warmumgeformt. Während der Warmumformung wird die zweite Platine pressgehärtet, indem diese in einem eine Matrize und einen Stempel aufweisenden Umformwerkzeug nicht nur warmumgeformt, sondern auch durch eine im Umformwerkzeug integrierte Kühleinrichtung abgeschreckt wird. Das Abschrecken erfolgt unterhalb der kritischen Abkühlgeschwindigkeit, beispielsweise innerhalb von etwa 15 Sekunden auf eine Körpertemperatur von unter 200° Celsius. Beim Schritt der Warmumformung werden am zweiten Formteil 3 nach außen abgebogene Einziehflansche erzeugt, die nach der Presshärtung auf eine Breite Q₁ von etwa 10 Millimetern oder weniger beschnitten werden. Die derart beschnittenen Einziehflansche dienen als Verbindungsabschnitte 7 zum Verbinden des zweiten Formteils 3 mit dem ersten Formteil 2. In Figur 4 ist erkennbar, dass die Breite Q₁ der abgebogenen Verbindungsabschnitte 7 durch radiusfreie Seitenendbereiche des zweiten Formteils 3 bestimmt sind, beziehungsweise, dass die Verbindungsabschnitte 7 gerade ausgebildet sind. Die Breite Q₁ der Verbindungsabschnitte kann jeweils etwa 10 Millimeter oder weniger betragen.

Im Weiteren wird der konkrete Aufbau der Fahrzeugsäule 1 anhand der Figuren 1 bis 4 näher beschrieben. Das kaltumgeformte erste Formteil 2 weist eine längliche, flächige Grundform mit zwei sich über die Längsrichtung X erstreckende Auswölbungen 10 auf. In das erste Formteil 2 wurden nach der Kaltumformung mehrere Durchgangsöffnungen 11 eingebracht, die beispielsweise zur Durchführung elektrischer Kabel oder anderer Fahrzeugkomponenten dienen. Randseitig sind zwei im Wesentlichen in der Längsrichtung X verlaufende Flanschabschnitte 12 mit Außenkanten 13 vorgesehen, wobei die Flanschabschnitte 12 mit weiteren nicht gezeigten Fahrzeugkomponenten, beispielsweise einer Außenhaut, verschweißt werden können. Zur Verbesserung der Schweißeignung können die beiden Flanschabschnitte 12 vor dem Verbinden mit der weiteren Fahrzeugkomponente beispielsweise mittels elektrischer Widerstandserwärmung gezielt entfestigt werden.

Das pressgehärtete zweite Formteil 3 weist nach der Presshärtung in Längsrichtung X des zweiten Formteils 3, respektive in Längsrichtung X der Fahrzeugsäule 1, mehrere Teilbereiche 8, 9 unterschiedlicher Blechdicke auf. Die Teilbereiche 8, 9 sind in den Figuren 1 und 2 mittels gestrichelter Linien angedeutet. Konkret weisen die verstärkten Teilbereiche 8 größere Blechdicken als die schwächeren Teilbereiche 9 auf. Zwischen den dickeren Teilbereichen 8 und den dünneren Teilbereichen 9 sind jeweils Übergangsbereiche vorgesehen, in denen ein kontinuierlicher Blechdickenübergang von einem Teilbereich mit einem dickeren Blech zu einem Teilbereich mit einem dünneren Blech stattfindet. Zudem weist das zweite Formteil 3 es eine längliche Grundform mit einem U-förmigen beziehungsweise hutprofilförmigen Querschnitt auf. An einem oberen und einem unteren Endbereich 14, 15 ist jeweils ein Schweißflansch 16, 17 vorgesehen, mittels denen das zweite Formteil 3 an den Fahrzeugdachrahmen beziehungsweise den Schweller des Kraftfahrzeuges gefügt werden kann.

In Figur 3 ist ein Querschnitt der Fahrzeugsäule 1 entlang der in Figur 1 gezeigten Schnittlinie III-III gezeigt. Erkennbar ist, dass das zweite Formteil 3 im Querschnitt schmaler als das erste Formteil 2 gestaltet ist. Dabei sind Verbindungskanten 18 des zweiten Formteils 3 gegenüber Außenkanten des ersten Formteils 2 versetzt, so dass das erste Formteil 2 hier einen einlagigen Flanschabschnitt des Strukturbauteils 1 bildet. Konkret stützt sich das hutprofilförmige zweite Formteil 3 mit den beiden vom zweiten Formteil 2 abgebogenen Verbindungsabschnitten 7, die durch Beschneiden der bei der Warmumformung entstandenen Einziehflansche hergestellt wurden, am ersten Formteil 2 ab. Durch die schräge Anstellung der beiden Verbindungsabschnitte 7 zum ersten Formteil 2 stehen die beiden Formteile 2, 3 entlang der zwei sich im Wesentlichen in Längsrichtung X erstreckender Verbindungskanten 18 mit dem ersten Formteil 2 in Anlage. Die Verbindungskanten 18 sind gegenüber den Außenkanten 13 des ersten Formteils 2 zurückgestellt, wodurch die Flanschabschnitte 12 des ersten Formteils 2 freigelegt, respektive nicht vom zweiten Formteil 3 überdeckt sind. Somit ist die Fahrzeugsäule 1 entlang der Flanschabschnitte 12 einlagig ausgebildet. Die Flanschabschnitte 12 erstrecken sich über die gesamte Längserstreckung L₁ des ersten Formteils 2 und weisen über etwa 90% der Längserstreckung L₁ eine Quererstreckung Q₂ von mehr als 20 Millimeter auf. Um die Fahrzeugsäule 1 an die weiteren Fahrzeugkomponenten, beispielsweise die Außenhaut, anzufügen, muss somit lediglich das erste Formteil 2 entlang der Flanschabschnitte 12 mit der Außenhaut gefügt oder anderweitig befestigt werden. Dies kann beispielsweise durch Schweißen erfolgen.

Die beiden Formteile 2, 3 werden entlang der beiden Verbindungskanten 18 auf dem ersten Formteil 2 mittels eines Laserstrahl-Schweißverfahrens mit jeweils einer durchgehenden Hochenergieschweißnaht 19 verbunden. Die Hochenergieschweißnaht 19kann sich über die gesamte Kantenlänge L₃ der jeweiligen Verbindungskante 18erstrecken. Durch die schräge Anordnung der beiden Verbindungsabschnitte 7 auf dem ersten Formteil 2 ist zwischen den Verbindungsabschnitten 7 und dem ersten Formteil 2 ein Winkel α von beispielsweise etwa 15°eingeschlossen, so dass ein sich ins Innere der Fahrzeugsäule 1 öffnender Innenraum 20 gebildet ist. Dabei dient der Innenraum 20 zur Entgasung von beim Schweißvorgang entstehenden Metalldämpfen. Die Metalldämpfe können zu diesem Zeitpunkt, in welchem die Fahrzeugsäule 1 noch nicht mit der Fahrzeugkarosserie zusammengefügt ist, am oberen und unteren Endbereich 14, 15 entweichen.

Ein Vorteil ist, dass sich das erste und das zweite Formteil 2, 3 durch die schmalen Verbindungsbereiche 7 lediglich geringfügig überlappen, so dass die unterschiedlichen Blechdicken der dickeren und dünneren Teilbereiche 8, 9 des zweiten Formteils 3 nicht mit der Blechdicke des ersten Formteils 2 übereinstimmen müssen. Dadurch wird zum einen der Planungs- und Herstellungsprozess für die Fahrzeugsäule 1 und zum anderen der Schweißvorgang einfacher. Somit kann das erste Formteil 2 ein standardisiertes Schließblech sein, das marktübergreifend einheitlich eine Blechdicke aufweist. Dann ist lediglich das zweite Formteil 3 an anwendungs- oder marktspezifische Vorgaben hinsichtlich des Crashschutzes anzupassen, indem bestimmte Teilbereiche des zweiten Formteils 3 durch eine Erhöhung der Blechdicke gezielt verstärkt werden. Zur zusätzlichen Verstärkung bestimmter Teilbereiche der Fahrzeugsäule 1 wäre es auch denkbar, innenseitig an das zweite Formteil 3 und/oder das erste Formteil 2 zumindest ein Verstärkungsblech anzufügen, das allerdings nicht die Flanschabschnitte 12 überdeckt. Dies könnte beispielsweise ein weiteres warmumgeformtes Formteil sein.

In Figur 5 beziehungsweise Figur 6 ist ein Querschnitt einer Fahrzeugsäule 21 gemäß einer zweiten Ausführungsform der vorliegenden Erfindung dargestellt. Bauteile, die mit Bauteilen der ersten Ausführungsform übereinstimmen, sind mit denselben Bezugszeichen versehen, wie in den Figuren 1 bis 4.

Die Fahrzeugsäule 21 gemäß der zweiten Ausführungsform unterscheidet sich von der in den Figuren 1 bis 4 gezeigten Fahrzeugsäule 1 gemäß der ersten Ausführungsform lediglich durch ein alternatives zweites Formteil 23.

Beim Schritt der Warmumformung des zweiten Formteils 23 werden ebenfalls Einziehflansche erzielt, die allerdings nach der Presshärtung vollständig abgeschnitten werden. Auf diese Weise erhält das zweite Formteil 23 im Querschnitt eine U-förmige Grundform mit zwei Verbindungsabschnitten 27. In Figur 6 ist erkennbar, dass sich eine Breite Q₁' der Verbindungsabschnitte 27 auf die Breite der Hochenergieschweißnähte 19 beschränken, so dass die Breite Q₁' der Verbindungsabschnitte 27 weniger als 2 Millimeter beträgt. Das zweite Formteil 23 ist somit gegenüber dem ersten Formteil 2 im Stoß mit einem Winkel α von etwa 80°angeordnet und wird entlang der beiden Verbindungskanten 18 mit dem ersten Formteil 2 mittels des Laserstrahl-Schweißverfahrens gefügt. Durch diese schräge Anordnung dient wiederum der sich ins Innere der Fahrzeugsäule 1 öffnende Innenraum 20 zur Entgasung von beim Schweißvorgang entstehenden Metalldämpfen.

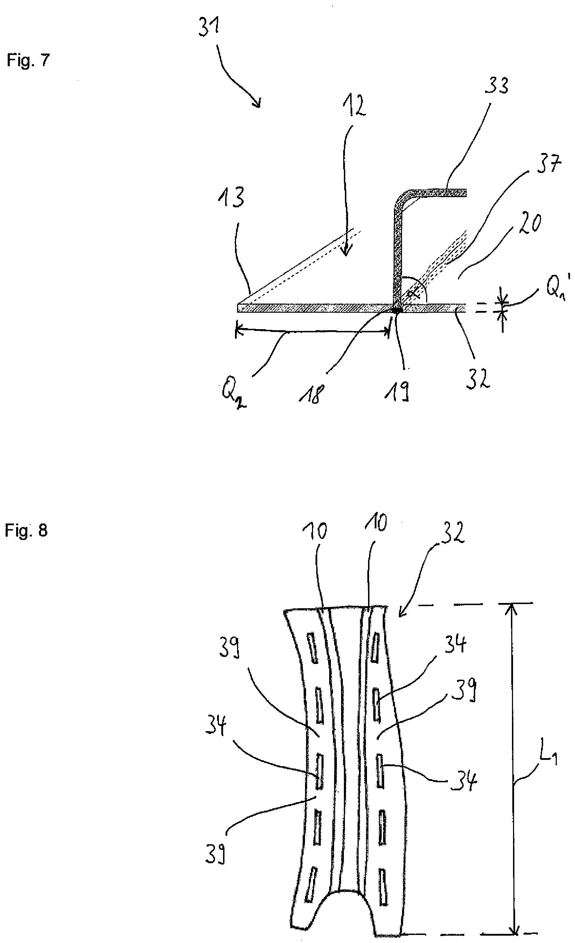

In Figur 7 ist ein Querschnitt eines Teils einer Fahrzeugsäule 31 gemäß einer dritten Ausführungsform der vorliegenden Erfindung dargestellt. Bauteile, die mit Bauteilen der ersten Ausführungsform übereinstimmen, sind mit denselben Bezugszeichen versehen, wie in den Figuren 1 bis 4.

Die Fahrzeugsäule 31 gemäß der dritten Ausführungsform unterscheidet sich von der in den Figuren 1 bis 3 gezeigten Fahrzeugsäule 1 gemäß der ersten Ausführungsform zum einen dadurch, dass ein erstes Formteil 32 mehrere Schlitze 34 aufweist, die mit einem zugehörigen zweiten Formteil 33 zusammenwirken. In Figur 8 ist eine vereinfachte Draufsicht auf einen Ausschnitt des ersten Formteils 32 gezeigt, in dem erkennbar ist, dass die Schlitze 34 beabstandet voneinander in einer Zweierreihe angeordnet sind und sich im Wesentlichen in der Längsrichtung X erstrecken.

Zum anderen unterscheidet sich die Fahrzeugsäule 31 gemäß der dritten Ausführungsform von der in den Figuren 1 bis 3 gezeigten Fahrzeugsäule 1 gemäß der ersten Ausführungsform dadurch, dass das zweite Formteil 33 mehrere Laschen 37 aufweist, die in dem in Figur 5 gezeigten Zustand in die Schlitze 34 gesteckt sind. Die Laschen 37 bilden mehrere Verbindungsabschnitte des zweiten Formteils 33, die nach der Presshärtung des zweiten Formteils 33 hergestellt werden. Konkret werden beim Schritt der Warmumformung des zweiten Formteils 23 ebenfalls Einziehflansche erzeugt, die nach der Presshärtung vollständig abgeschnitten werden. Das zweite Formteil 33 erhält somit im Querschnitt eine U-förmige Grundform. Anschließend werden aus beiden Schenkeln 38 des zweiten Formteils 33 Verbindungsabschnitte in Form der Laschen 37 mittels eines Laserstrahl-Schneidverfahrens ausgeschnitten.

Nach Herstellung der Laschen 38 werden diese durch Aufsetzen des zweiten Formteils 33 auf das erste Formteil 32 in die Schlitze 34 gesteckt und von einer dem zweiten Formteil 33 gegenüberliegenden Unterseite 39 des ersten Formteils 32 entlang der Laschen 38 verschweißt. Somit entstehen mehrere sich auf die Laschen 38 begrenzende Hochenergieschweißnähte 19, wobei zwischen zwei benachbarten Laschen 38 unverschweißte Zwischenabschnitte 39 gebildet sind. Durch die Anordnung des zweiten Formteils 33 auf Stoß gegenüber dem ersten Formteil 32 ist zwischen dem ersten und dem zweiten Formteil 32, 33 ein Winkel α von etwa 90° eingeschlossen, so dass der sich ins Innere der Fahrzeugsäule 1 öffnende Innenraum 20 zur Entgasung von beim Schweißvorgang entstehenden Metalldämpfen dient. Es versteht sich jedoch, dass der zwischen den Formteilen 32, 33 eingeschlossene Winkel auch kleiner als 90° sein kann, insbesondere auch kleiner als 80°.

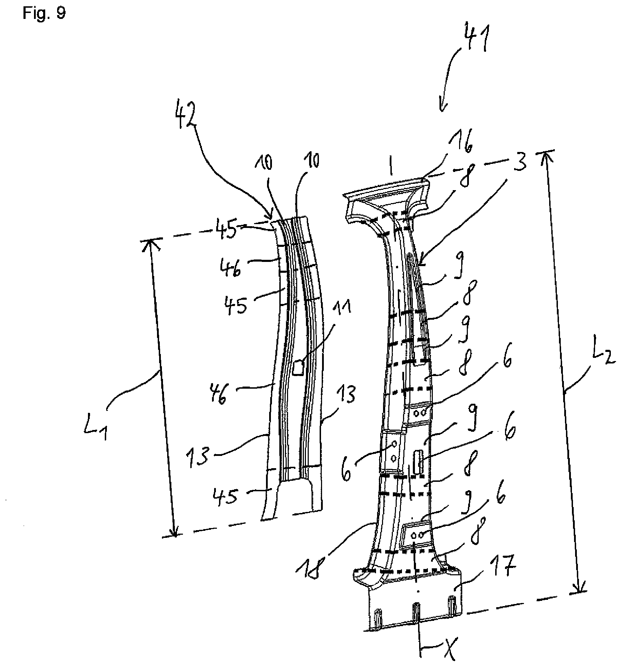

In Figur 9 ist eine Fahrzeugsäule 41 gemäß einer vierten Ausführungsform der vorliegenden Erfindung in einer perspektivischen Explosionsdarstellung gezeigt. Bauteile, die mit Bauteilen der ersten Ausführungsform übereinstimmen, sind mit denselben Bezugszeichen versehen, wie in den Figuren 1 bis 4.

Die Fahrzeugsäule 41 gemäß der vierten Ausführungsform unterscheidet sich von der Fahrzeugsäule 1 gemäß der ersten Ausführungsform lediglich durch ein alternatives Schließblech 42, das gemäß der vierten Ausführungsform eine variable Blechdicke über die Längserstreckung L₁ aufweist.

Zur Herstellung des kaltumgeformten Schließblechs 42 wird zunächst ein Bandmaterial flexibel gewalzt und anschließend mit einer Zinkbeschichtung versehen. Das flexibel gewalzte Stahlblech wird auch als Tailor Rolled Blank bezeichnet. Aus diesem Bandmaterial wird eine erste Platine herausgearbeitet, so dass die erste Platine eine variable Dicke über deren Längserstreckung aufweist. Anschließend wird die erste Platine kaltumgeformt. Möglich ist auch, dass die erste Platine als ein Zwischenschritt weichgeglüht wurde, bevor diese kaltumgeformt wird.

Das kaltumgeformte Schließblech 42 weist nach der Umformung in Längsrichtung X mehrere Teilbereiche 45, 46 unterschiedlicher Blechdicke auf, die in der Figur 9 mittels gestrichelter Linien angedeutet sind. Konkret weisen die dickeren Teilbereiche 45 größere Blechdicken als die dünneren Teilbereiche 46 auf. Zwischen den dickeren Teilbereichen 45 und den dünneren Teilbereichen 46 sind auch Übergangsbereiche vorgesehen, in denen ein kontinuierlicher Blechdickenübergang von einem Teilbereich 45 mit einem dickeren Blech zu einem Teilbereich 46 mit einem dünneren Blech stattfindet. Beispielsweise kann das Schließblech 42 an einem oberen Längsende einen der verstärkten Teilbereiche 45 aufweisen, um im Bereich einer Aufnahme eines Anschnallgurts für Passagiere des Kraftfahrzeuges einen verstärkten Bereich bereitzustellen.

Das gehärtete zweite Formteil 3 weist ebenfalls in Längsrichtung X mehrere Teilbereiche 8, 9 unterschiedlicher Blechdicke auf, die analog zu den Figuren 1 und 2 mittels gestrichelter Linien angedeutet sind. Die unterschiedlichen Blechdicken des Schließblechs 42 stimmen nicht mit den unterschiedlichen Blechdicken des zweiten Formteils 3 überein. Durch die schmalen Verbindungsabschnitte 7 können die beiden Formteile 3, 42 trotzdem gut miteinander entlang der Verbindungskante 18 mittels eines Hochenergiestrahl-Schweißverfahrens gefügt werden.

### Bezugszeichenliste

- 1: Fahrzeugsäule
- 2: erstes Formteil
- 3: zweites Formteil
- 6: Durchgangsöffnung
- 7: Verbindungsabschnitt
- 8: verstärkter Teilbereich
- 9: weicherer Teilbereich
- 10: Auswölbung
- 11: Durchgangsöffnung
- 12: Flanschabschnitt
- 13: Außenkante
- 14: oberer Endbereich
- 15: unterer Endbereich
- 16: Schweißflansch
- 17: Schweißflansch
- 18: Verbindungskante
- 19: Hochenergieschwei ßnaht
- 20: Innerraum
- 21: Fahrzeugsäule
- 23: zweites Formteil
- 27: Verbindungsabschnitt
- 31: Fahrzeugsäule
- 32: erstes Formteil
- 33: zweites Formteil
- 34: Schlitz
- 37: Lasche
- 38: Schenkel
- 39: Zwischenabschnitte
- 41: Fahrzeugsäule
- 42: erstes Formteil
- 45: verstärkter Teilbereich
- 46: weicherer Teilbereich

- L₁: Längserstreckung des ersten Formteils
- L₂: Längserstreckung des zweiten Formteils
- L₃: Kantenlänge
- Q₁, Q₁': Breite des Verbindungsbereichs
- Q₂: Quererstreckung des Flanschabschnitts
- X: Längsrichtung
- α: Winkel

## Patentansprüche

1. Fahrzeugsäule (1; 21; 31; 41) für eine Kraftfahrzeugkarosserie, umfassend
ein erstes Formteil als Innenblech (2; 32; 42) der Fahrzeugsäule (1; 21; 31; 41) und ein zweites Formteil als Außenblech (3; 23; 33) der Fahrzeugsäule (1; 21; 31; 41),
**dadurch gekennzeichnet,**
**dass** das Außenblech (3; 23; 33) ein warmumgeformtes und gehärtetes Formteil ist und einen Verbindungsabschnitt (7; 27; 37) zum Verbinden mit dem Innenblech (2; 32; 42), das ein kaltgeformtes Formteil ist, aufweist, wobei
das Innenblech (2; 32; 42) und das Außenblech (3; 23; 33) mittels einer Hochenergiestrahlschweißnaht (19) entlang einer Verbindungskante (18) des Verbindungsabschnitts (7; 27; 37) miteinander verbunden sind, wobei die Verbindungskante (18) des Verbindungsabschnitts (7; 27; 37) von einer Außenkante (13) des Innenbleches (2; 32; 42) derart beabstandet ist, dass das Innenblech (2; 32; 42) zwischen der Verbindungskante (18) des Außenbleches (3; 23; 33) und der Außenkante (13) des Innenbleches (2; 32; 42) einen einlagigen Flanschabschnitt (12) der Fahrzeugsäule (1; 21; 31; 41) bildet, und
**dass** das Außenblech (3; 23; 33) eine variable Dicke über einer Längserstreckung (L₂) des Außenbleches (3; 23; 33) aufweist.

2. Fahrzeugsäule (1; 21; 31; 41) nach Anspruch 1, **dadurch gekennzeichnet, dass** der einlagige Flanschabschnitt (12) über zumindest 50 % einer Längserstreckung (L₁) des Innenbleches (2; 32; 42) eine Quererstreckung (Q₂) von mehr als 20 Millimetern aufweist.

3. Fahrzeugsäule (1; 21; 31; 41) nach Anspruch 1 oder 2, **dadurch gekennzeichnet,**
**dass** sich der einlagige Flanschabschnitt (12) über zumindest 50 % der Längserstreckung (L₁) des Innenbleches (2; 32; 42) erstreckt.

4. Fahrzeugsäule (1; 21; 31; 41) nach einem der vorherigen Ansprüche, **dadurch gekennzeichnet,**
**dass** die Hochenergiestrahlschweißnaht (19) über zumindest 50 % einer Kantenlänge (L₃) der Verbindungskante (18) durchgehend ausgebildet ist.

5. Fahrzeugsäule (1; 21; 31; 41) nach einem der vorherigen Ansprüche, **dadurch gekennzeichnet,**
**dass** der Verbindungabschnitt (7; 27; 37) im Querschnitt durch die Fahrzeugsäule eine Breite von weniger als 10 Millimetern aufweist.

6. Fahrzeugsäule (1; 21; 31; 41) nach einem der vorherigen Ansprüche, **dadurch gekennzeichnet,**
**dass** der Verbindungsabschnitt (7; 27; 37) mit dem Innenblech (2; 32; 42) einen Winkel von 1° bis 90° einschließt.

7. Fahrzeugsäule (31) nach einem der vorherigen Ansprüche, **dadurch gekennzeichnet,**
**dass** der Verbindungsabschnitt in Form einer Lasche (37) ausgebildet ist, die in einen in dem Innenblech (32) ausgebildeten Schlitz (34) eingreift,
wobei insbesondere mehrere der Verbindungsabschnitte in Form von Laschen (37) vorgesehen sind, die mit dem Innenblech (32) verschweißt sind, wobei zwischen zwei benachbarten Laschen (37) ein unverschweißter Zwischenabschnitt (39) gebildet ist.

8. Fahrzeugsäule (1; 21; 31; 41) nach einem der vorherigen Ansprüche, **dadurch gekennzeichnet,**
**dass** das Außenblech (3; 23; 33) über mindestens 80% einer Längserstreckung (L₁) des Innenbleches (2; 32; 42) schmaler als das Innenblech (2; 32; 42) ausgebildet ist.

9. Fahrzeugsäule (41) nach einem der vorherigen Ansprüche, **dadurch gekennzeichnet,**
**dass** das Innenblech (42) eine variable Dicke über dessen Längserstreckung (L₁) aufweist.

10. Verfahren zur Herstellung einer Fahrzeugsäule (1; 21; 31; 41) für eine Kraftfahrzeugkarosserie, umfassend folgende Schritte:
- Kaltumformen einer ersten Platine zu einem Innenblech (2; 32; 42),
- Erzeugen einer zweiten Platine mit einer variablen Dicke über einer Längserstreckung der Platine,
- Warmumformen der zweiten Platine zu einem Außenblech (3; 23; 33) mit einem Verbindungsabschnitt (7; 27; 37) zum Verbinden mit dem Innenblech (2; 32; 42),
- Härten des Außenbleches (3; 23; 33),
- Aufsetzen des Außenbleches (3; 23; 33) auf das Innenblech (2; 32; 42) derart, dass eine mit dem Innenblech (2; 32; 42) in Anlage kommende Verbindungskante (18) von einer Außenkante (13) des Innenbleches (2; 32; 42) beabstandet ist,
- Fügen des Außenbleches (3; 23; 33) mit dem Innenblech (2; 32; 42) mittels einer mit einem Hochenergiestrahlverfahren erzeugten Hochenergiestrahlschweißnaht (19), die entlang der Verbindungskante (18) verläuft.

11. Verfahren nach Anspruch 10, **dadurch gekennzeichnet,**
**dass** für den Schritt des Fügens gilt, dass die Hochenergiestrahlschweißnaht (19) über zumindest 50 % einer Kantenlänge (L₃) der Verbindungskante (18) durchgehend erzeugt wird.

12. Verfahren nach Anspruch 10 oder 11, **dadurch gekennzeichnet,**
**dass** vor dem Schritt des Kaltumformens der ersten Platine und des Warmumformens der zweiten Platine zumindest einer der folgenden Schritte vorgesehen ist:
- Erzeugen eines ersten Bandmaterials mit einer variablen Dicke über einer Längserstreckung des ersten Bandmaterials;
- Oberflächenbeschichten des ersten Bandmaterials;
- Erzeugen der ersten Platine aus dem ersten Bandmaterial,
- Oberflächenbeschichten eines zweiten Bandmaterials, bevor die zweite Platine aus dem zweiten Bandmaterial erzeugt wird.

13. Verfahren nach einem der Ansprüche 10 bis 12, **dadurch gekennzeichnet, dass** vor dem Schritt des Fügens zumindest einer der folgenden Schritte vorgesehen ist:
- Einarbeiten wenigstens einer ersten Durchgangsöffnung (11) in das Innenblech (2; 32; 42),
- Einarbeiten wenigstens einer zweiten Durchgangsöffnung (6) in das Außenblech (3; 23; 33).

14. Verfahren nach einem der Ansprüche 10 bis 13, **dadurch gekennzeichnet, dass** beim Schritt der Warmumformung am Außenblech (3; 23; 33) ein Einziehflansch erzeugt wird, wobei als weiterer Schritt vorgesehen ist:
- Beschneiden zumindest eines Teils des Einziehflansches, wobei der Einziehflansch unter Ausbildung zumindest einer Lasche (37) vollständig abgeschnitten wird,
und dass in das Innenblech (32) zumindest ein Schlitz (34) eingearbeitet wird, wobei der Schritt des Aufsetzens des Außenbleches (3; 23; 33) auf das Innenblech (2; 32; 42) den folgenden Teilschritt umfasst:
- Einsetzen der Lasche (37) in den Schlitz (34).

## Claims

1. Vehicle column (1; 21; 31; 41) for a motor vehicle body, comprising:
a first formed part as an inner panel (2; 32; 42) of the vehicle column (1; 21; 31; 41), and a second formed part as an outer panel (3; 23; 33) of the vehicle column (1; 21; 31; 41),
**characterised in**
**that** the outer panel (3; 23; 33) is a warm formed and hardened formed part and comprises a connection portion (7; 27; 37) for connecting with the inner panel (2; 32; 42) that is a cold formed part,
wherein the inner panel (2; 32; 42) and the outer panel (3; 23; 33) are connected to each other by a high energy beam welding seam (19) along a connection edge (18) of the connection portion (7; 27; 37),
wherein the connecting edge (18) of the connection portion (7; 27; 37) is distanced from an outer edge (13) of the inner panel (2; 32; 42) such, that the inner panel (2; 32; 42) forms a one-layered flange portion (12) of the vehicle column (1; 21; 31; 41) between the connecting edge (18) of the outer panel (3; 23; 33) and the outer edge (13) of the inner panel (2; 32; 42), and
**that** the outer panel (3; 23; 33) has a variable thickness along a longitudinal extension (L₂) of the outer panel (3; 23; 33).

2. Vehicle column (1; 21; 31; 41) according to claim 1,
**characterised in**
**that** the flange portion (12) has a transversal extension (Q₂) of more than 20 millimeters along at least 50% of a longitudinal extension (L₁) of the inner panel (2; 32; 42).

3. Vehicle column (1; 21; 31; 41) according to claim 1 or 2,
**characterised in**
**that** the one-layered flange portion (12) extends along at least 50% of the longitudinal extension (L₁) of the inner panel (2; 32; 42).

4. Vehicle column (1; 21; 31; 41) according to one of the preceding claims,
**characterised in**
**that** the high energy beam welding seam (19) is continuously formed along at least 50% of an edge length (L₃) of the connection edge (18).

5. Vehicle column (1; 21; 31; 41) according to one of the preceding claims,
**characterised in**
**that** the connection portion (7; 27; 37) has a width of less than 10 millimeters in a cross section through the vehicle column.

6. Vehicle column (1; 21; 31; 41) according to one of the preceding claims,
**characterised in**
**that** the connection portion (7; 27; 37) and the inner panel (2; 32; 42) enclose an angle of 1° to 90°.

7. Vehicle column (31) according to one of the preceding claims, **characterised in**
**that** the connection portion is provided in form of a tab (37), which engages in a slot (34) formed in the inner panel (32),
wherein in particular several of the connection portions are provided in form of tabs (37), which are welded to the inner panel (32), wherein between two neighbouring tabs (37) a non-welded intermediate portion (39) is formed.

8. Vehicle column (1; 21; 31; 41) according to one of the preceding claims,
**characterised in**
**that** the outer panel (3; 23; 33) is narrower than the inner panel (2; 32; 42) along at least 80% of a longitudinal extension (L₁) of the inner panel (2; 32; 42).

9. Vehicle column (41) according to one of the preceding claims,
**characterised in**
**that** the inner panel (42) has a variable thickness along its longitudinal extension (L₁).

10. Method for manufacturing a vehicle column (1; 21; 31; 41) for a motor vehicle body, comprising the following steps:
- cold-forming of a first blank to a inner panel (2; 32; 42),
- producing a second blank with a variable thickness along a longitudinal extension of the blank,
- warm-forming of the second blank to a outer panel (3; 23; 33) with a connection portion (7; 27; 37) for being connected to the inner panel (2; 32; 42),
- hardening of the outer panel (3; 23; 33),
- putting the second part (3; 23; 33) onto the inner panel (2; 32; 42) such, that a connection edge (18) abutting the inner panel (2; 32; 42) is distanced from an outer edge (13) of the inner panel (2; 32; 42),
- connecting the outer panel (3; 23; 33) to the inner panel (2; 32; 42) by a high energy beam welding seam (19), extending along the connection edge (18), produced with a high energy beam welding method.

11. Method according to claim 10,
**characterised in**
**that** for the step of connecting it applies that the high energy beam welding seam (19) is produced continuously along at least 50% of an edge length (L₃) of the connection edge (18).

12. Method according to claim 10 or 11,
**characterised in**
**that** before the step of cold-forming the first blank and the step of warm-forming of the second blank at least one of the following steps is provided:
- producing a first strip material with a variable thickness along a longitudinal extension of the first strip material;
- surface coating of the first strip material;
- producing a first blank from the first strip material;
- surface coating of a second strip material before the second blank is produced from the second strip material.

13. Method according to one of claims 10 to 12,
**characterised in**
**that** before the step of connecting at least one of the following steps is provided:
- working at least one first through opening (11) into the inner panel (2; 32; 42),
- working at least one second through opening (6) into the outer panel (3; 23; 33).

14. Method according to one of claims 10 to 13,
**characterised in**
**that** during the step of warm-forming a feeding flange is produced at the outer panel (3; 23; 33), wherein as further step it is provided:
- cutting at least a part of the feeding flange, wherein the feeding flange is completely cut off so as to form at least one tab (37),
and **that** at least one slot (34) is worked into the inner panel (32), wherein the step of putting the second part (3; 23; 33) onto the first part (2; 32; 42) comprises the following partial step:
- feeding the at least one tab (37) into the at least one slot (34).

## Revendications

1. Montant de véhicule (1 ; 21 ; 31 ; 41) pour une carrosserie de véhicule automobile, comprenant
une première pièce moulée en tant que tôle intérieure (2 ; 32 ; 42) du montant de véhicule (1 ; 21 ; 31 ; 41) et une deuxième pièce moulée en tant que tôle extérieure (3 ; 23 ; 33) du montant de véhicule (1 ; 21 ; 31 ; 41)
**caractérisée en ce que**
la tôle extérieure (3 ; 23 ; 33) est une pièce moulée transformée à chaud et trempée et comporte une portion de raccord (7 ; 27 ; 37) pour raccordement à la tôle intérieure (2 ; 32 ; 42), qui est une pièce moulée formée à froid,
la tôle intérieure (2; 32; 42) et la tôle extérieure (3; 23; 33) étant reliées l'une à l'autre le long d'un bord de raccordement (18) de la portion de raccord (7; 27; 37) au moyen d'un cordon de soudure par faisceau à haute énergie (19), le bord de raccordement (18) de la portion de raccord (7; 27; 37) étant à distance d'un bord extérieur (13) de la tôle intérieure (2; 32; 42) de telle manière que la tôle intérieure (2; 32; 42) forme entre le bord de raccordement (18) de la tôle extérieure (3; 23; 33) et le bord extérieur (13) de la tôle intérieure (2; 32; 42) une portion de bride (12) monocouche du montant de véhicule (1 ; 21 ; 31 ; 41), et
**en ce que** la tôle extérieure (3; 23; 33) comporte une épaisseur variable sur une extension longitudinale (L₂) de la tôle extérieure (3; 23; 33).

2. Montant de véhicule (1; 21; 31; 41) selon la revendication 1, **caractérisé en ce que** la portion de bride (12) monocouche comporte sur au moins 50% d'une extension longitudinale (L₁) de la tôle intérieure (2; 32; 42) une extension transversale (Q₂) de plus de 20 millimètres.

3. Montant de véhicule (1; 21; 31; 41) selon la revendication 1 ou 2, **caractérisé en ce que** la portion de bride (12) monocouche s'étend sur au moins 50% de l'extension longitudinale (L₁) de la tôle intérieure (2; 32; 42).

4. Montant de véhicule (1; 21; 31; 41) selon l'une quelconque des revendications précédentes, **caractérisé en ce que** le cordon de soudure par faisceau à haute énergie (19) est constitué continu sur au moins 50% d'une longueur de bord (L₃) du bord de raccordement (18) .

5. Montant de véhicule (1; 21; 31; 41) selon l'une quelconque des revendications précédentes, **caractérisé en ce que** la portion de raccord (7; 27; 37) comporte une largeur de moins de 10 millimètres dans la portion transversale à travers le montant de véhicule.

6. Montant de véhicule (1; 21; 31; 41) selon l'une quelconque des revendications précédentes, **caractérisé en ce que** la portion de raccord (7; 27; 37) forme avec la tôle intérieure (2; 32; 42) un angle de 1° à 90°.

7. Montant de véhicule (31) selon l'une quelconque des revendications précédentes, **caractérisé en ce que** la portion de raccord est constituée sous la forme d'une languette (37), qui vient en prise dans une fente (34) constituée dans la tôle intérieure (32), plusieurs portions de raccord étant notamment prévues sous la forme de languettes (37), qui sont soudées à la tôle intérieure (32), une portion intermédiaire (39) non soudée étant formée entre deux languettes (37) adjacentes.

8. Montant de véhicule (1; 21; 31; 41) selon l'une quelconque des revendications précédentes, **caractérisé en ce que** la tôle extérieure (3; 23; 33) est constituée sur au moins 80% d'une extension longitudinale (L₁) de la tôle intérieure (2; 32; 42) plus étroite que la tôle intérieure (2; 32; 42).

9. Montant de véhicule (41) selon l'une quelconque des revendications précédentes, **caractérisé en ce que** la tôle intérieure (42) comporte une épaisseur variable sur l'extension longitudinale (L₁) de celle-ci.

10. Procédé de fabrication d'un montant de véhicule (1; 21; 31; 41) pour une carrosserie de véhicule automobile, comprenant les phases suivantes :
- formage à froid d'un premier larget en une tôle intérieure (2; 32; 42),
- production d'un deuxième larget avec une épaisseur variable sur une extension longitudinale du larget,
- formage à chaud du deuxième larget en une tôle extérieure (3; 23; 33) avec une portion de raccord (7; 27; 37) pour raccorder à la tôle intérieure (2; 32; 42),
- trempe de la tôle extérieure (3; 23; 33),
- pose de la tôle extérieure (3; 23; 33) sur la tôle intérieure (2; 32; 42) de telle manière qu'un bord de raccordement (18) venant en appui avec la tôle intérieure (2; 32; 42) est à distance d'un bord extérieur (13) de la tôle intérieure (2; 32; 42),
- assemblage de la tôle extérieur (3; 23; 33) avec la tôle intérieure (2; 32; 42) au moyen d'un cordon de soudure par faisceau à haute énergie (19) produit par un procédé de faisceau à haute énergie, qui passe le long du bord de raccordement (18),

11. Procédé selon la revendication 10, **caractérisé en ce que** pour la phase d'assemblage, il convient que le cordon de soudure par faisceau à haute énergie (19) soit produit en continu sur au moins 50% d'une longueur de bord (L₃) du bord de raccordement (18).

12. Procédé selon la revendication 10 ou 11, **caractérisé en ce qu'**avant la phase de formage à froid du premier larget et de formage à chaud du deuxième larget au moins une des phases suivantes est prévue :
- production d'un premier matériau en bande avec une épaisseur variable sur une extension longitudinale du premier matériau en bande,
- revêtement de surface du premier matériau en bande,
- production du premier larget à partir du premier matériau en bande,
- revêtement de surface d'un deuxième matériau en bande, avant que le deuxième larget soit produit à partir du deuxième matériau en bande.

13. Procédé selon l'une quelconque des revendications 10 à 12, **caractérisé en ce qu'**avant la phase d'assemblage au moins une des phases suivantes est prévue :
- Aménagement d'au moins une première ouverture de passage (11) dans la tôle intérieure (2; 32; 42),
- Aménagement d'au moins une deuxième ouverture de passage (6) dans la tôle extérieure (3; 23; 33).

14. Procédé selon l'une quelconque des revendications 10 à 13, **caractérisé en ce que** lors de la phase de formage à chaud une bride de relevage est produite sur la tôle extérieure (3; 23; 33), une autre phase étant prévue de :
- découpe d'au moins une partie de la bride de relevage, la bride de relevage étant complètement découpée en formant au moins une languette (37),
et **en ce que** dans la tôle intérieure (32) au moins une fente (34) est aménagée, la phase de la pose de la tôle extérieure (3; 23; 33) dur la tôle intérieure (2; 32; 42) comprenant la phase partielle suivante :
- insertion de la languette (37) dans la fente (34) .
